# EUROPÄISCHE PATENTSCHRIFT

(11) **EP 1 216 466 B1**
(45) Veröffentlichungstag und Bekanntmachung des Hinweises auf die Patenterteilung: **02.05.2003**
(21) Anmeldenummer: 00952832.4
(22) Anmeldetag: 30.08.2000
(51) Int. Cl.: G08C 17/02

(54) **SENSOR MIT DRAHTLOSER DATENÜBERTRAGUNG MIT GERINGER LEISTUNGSAUFNAHME**
SENSOR COMPRISING WIRELESS DATA TRANSFER UNIT WITH A LOW POWER UPTAKE
CAPTEUR AVEC TRANSMISSION DE DONNEES SANS FIL ET FAIBLE CONSOMMATION D'ENERGIE

(30) Priorität: 01.10.1999 DE 19947344
(43) Veröffentlichungstag der Anmeldung: 26.06.2002
(73) Patentinhaber: ABB RESEARCH LTD., 8050 Zürich (CH)
(72) Erfinder: RAMSEIER, Stefan, CH-5416 Kirchdorf (CH); DZUNG, Dacfey, CH-5430 Wettingen (CH); KJESBU, Snorre, N-1341 Slependen (NO); APNESETH, Christoffer, N-0263 Oslo (NO); VEFLING, Harald, N-1392 Vettre (NO)
(74) Vertreter: ABB Patent Attorneys
(86) Internationale Anmeldenummer: CH0000459
(87) Internationale Veröffentlichungsnummer: WO01026069

(56) Entgegenhaltungen:
- GB-A- 2 210 537
- GB-A- 2 271 691
- GB-A- 2 299 695
- US-A- 5 854 994

## Beschreibung

### Technisches Gebiet

Die Erfindung bezieht sich auf das Gebiet der Kommunikationstechnik. Sie bezieht sich auf ein Verfahren und eine Vorrichtung zur drahtlosen Übermittlung von Daten eines Sensors an eine Basisstation gemäss dem Oberbegriff der Patentansprüche 1 und 9.

### Stand der Technik

Sensoren, insbesondere Näherungssensoren sind allgemein bekannt und werden in Automatisierungsanlagen, Fertigungssystemen und verfahrenstechnischen Anlagen eingesetzt. Näherungssensoren erlauben eine Messung von Flüssigkeitsniveaux oder von Positionen von Werkstücken oder Maschinenteilen. Näherungsschalter erlauben eine Detektion einer An- oder Abwesenheit von Flüssigkeiten, Werkstücken oder Maschinenteilen. Um die Verkabelung von Sensoren zu eliminieren, was bei einer Vielzahl von Sensoren von Vorteil ist, übermitteln Sensoren ihre Messdaten kabellos über Funk.

Batteriebetriebene Geräte weisen oft einen sogenannten Schlafmodus auf, um ihre Leistungsaufnahme zu verringern. Bei drahtlosen Kommunikationssystemen sind Sender und Empfänger während des Schlafmodus ausgeschaltet und werden nur periodisch aktiviert. Für autonome Sensoren, die einer Basisstation drahtlos Sensorwerte übermitteln sollen, stellt sich die Aufgabe, dies mit einem möglichst kleinen Energieverbrauch zu bewerkstelligen, wobei eine zuverlässige Übertragung der Sensorwerte gewährleistet sein muss.

Aus der EP-A-0 907 262 ist ein Verfahren zur Übermittlung von Daten an Stationen eines drahtlosen Kommunikationsnetzwerkes offenbart. Dabei übermittelt eine Zentraleinheit Wecksignale, mit denen Stationen, welche Daten empfangen sollen, aus einem energiesparenden Schlafmodus in einen Aktivmodus umgeschaltet werden. Im Aktivmodus ermittelt eine Station, ob Daten zu übermitteln sind, und übermittelt diese allenfalls. Dadurch gerät die Station oft in den energieverbrauchenden Aktivmodus, auch wenn keine Daten zu übermitteln sind. Falls eine Station Daten übermitteln möchte, wird die Übermittlung durch das Warten auf ein Wecksignal verzögert.

Ein TDMA (Time Division Multiple Access) Verfahren ist allgemein bekannt. Es erlaubt einen kontrollierten und deterministischen Zugriff auf ein Kommunikationsmedium, wie beispielsweise in der EP-A-0 899 920 beschrieben. TDMA wird beispielsweise für Satellitenverbindungen, mobile Kommunikationsmittel (GSM) und Funktelefone verwendet.

US 5,854,994 und GB 2 271 691 zeigen je einen Sensor, bei welchem eine Sendeeinheit in regelmässigen Abständen oder beim Überschreiten eines Grenzwertes eingeschaltet wird. Nach Übermittlung von Sensordaten wird die Sendeeinheit ausgeschaltet und eine Empfangseinheit zum Empfang eines Bestätigungssignals eingeschaltet. Eine Synchronisation einer Internen Uhr des Sensors geschieht bei der Installation des Sensors und in regelmässigen zeitlichen Intervallen, nach denen die Empfangseinheit zum Empfang eines Synchronisationssignals eingeschaltet wird.

### Darstellung der Erfindung

Es ist Aufgabe der Erfindung, ein Verfahren und eine Vorrichtung mit geringer Leistungsaufnahme zur drahtlosen Übermittlung von Daten von einem Sensor an eine Basisstation zu schaffen, welche die oben genannten Nachteile behebt.

Diese Aufgabe lösen ein Verfahren und eine Vorrichtung mit geringer Leistungsaufnahme zur drahtlosen Übermittlung von Daten von einem Sensor an eine Basisstation mit den Merkmalen der Patentansprüche 1 und 9.

Im erfindungsgemässen Verfahren erhält eine Kommunikationseinheit von einer zugeordneten Sensoreinheit ein Aufwecksignal und geht von einem energiesparenden Schlafmodus in einen Aktivmodus über. Ein Empfänger der Kommunikationseinheit empfängt und detektiert ein von einer Basisstation ausgesendetes zyklisch wiederkehrendes moduliertes Synchronisationssignal. Eine vorgegebene Zeit nach dieser Detektion sendet ein Sender der Kommunikationseinheit ein moduliertes Datensignal. Der Empfänger wartet den Empfang eines modulierten Bestätigungssignals ab. Wird ein solches empfangen, so geht die Kommunikationseinheit in den Schlafmodus über. Andernfalls wird das modulierte Datensignal in wiederkehrenden, der Kommunikationseinheit zugeordneten Zeitfenstern wiederholt gesendet, bis ein moduliertes Bestätigungssignal empfangen wird.

Erfindungsgemäss wird also die Kommunikationseinheit durch Signale unterschiedlicher Herkunft in den Aktiv- resp. Schlafmodus versetzt.

Das erfindungsgemässe Verfahren hat den Vorteil, dass ein stärker energieverbrauchender Betrieb der Kommunikationseinheit nur auftritt, wenn Daten übertragen werden müssen, und dass erst nach einer erfolgreichen Übertragung wieder auf den Schlafmodus umgeschaltet wird.

Ein weiterer Vorteil ist, dass die Kommunikationseinheit beim Auftreten von Sensordaten sofort in den Aktivmodus übergeht, ohne auf ein Aufwecksignal der Basisstation warten zu müssen. Da Synchronisationssignale öfters übermittelt werden können, als es für externe Aufwecksignale sinnvoll wäre, werden Sensordaten schneller an die Basisstation übermittelt.

In einer bevorzugten Variante der Erfindung ist der Sensor ein Näherungssensor oder ein Näherungsschalter. Vorzugsweise ist der Sensor ein induktiver, kapazitiver, photoelektrischer oder Ultraschall- oder Hall-Sensor.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: schematisch einen erfindungsgemässen Sensor;
- Figur 2: einen Signalrahmen;
- Figur 3: schematisch einen Ablauf des erfindungsgemässen Verfahrens; und
- Figur 4: einzelne Zeitfenster aus einem Signalrahmen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

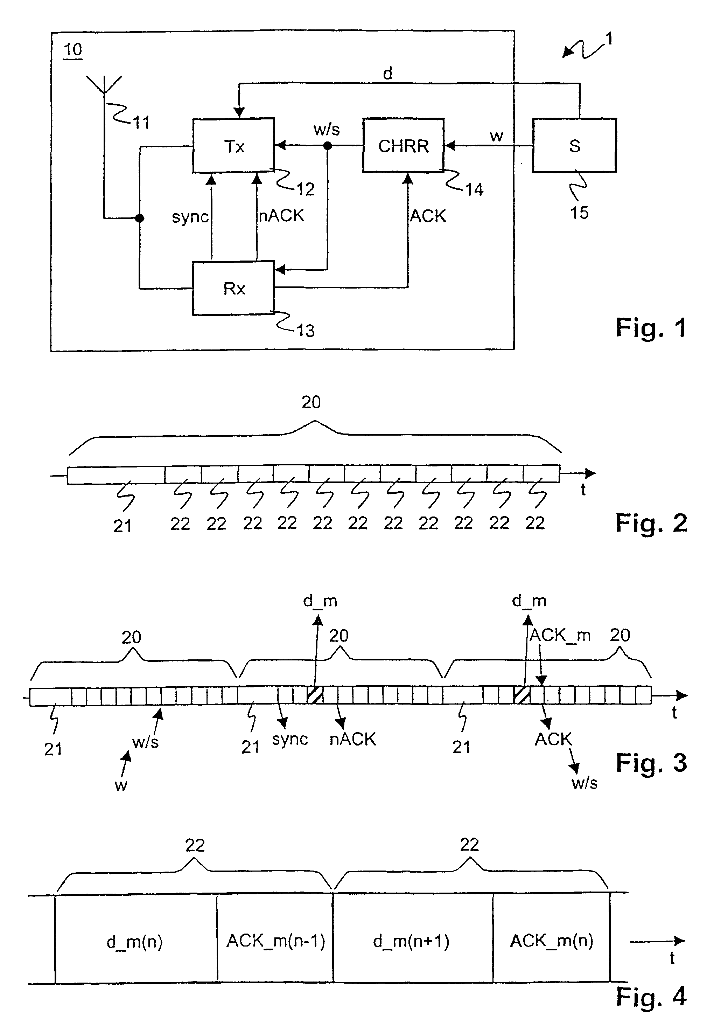

Die Figur 1 zeigt schematisch eine Funktionsstruktur eines erfindungsgemässen Sensors 1 mit einer Kommunikationseinheit 10 und einer zugeordneten Sensoreinheit 15. Die Kommunikationseinheit 10 weist eine Antenne 11 für elektromagnetische Wellen, welche mit einem Sender 12 und einem Empfänger 13 verbunden ist, sowie eine Schlafeinheit 14 auf. Die Kommunikationseinheit 10 weist Signalverbindungen zur Übertragung eines Synchronisationssignals sync und eines negativen Bestätigungssignals nACK vom Empfänger 13 an den Sender 12 auf, eine Signalverbindung zur Übertragung eines Bestätigungssignals ACK vom Empfänger 13 an die Schlafeinheit 14, eine Signalverbindung zur Übertragung eines Wach/Schlafsignals w/s von der Schlafeinheit 14 an den Sender 12 und an den Empfänger 13, eine Signalverbindung zur Übertragung eines Aufwecksignals w von der Sensoreinheit 15 an die Schlafeinheit 14, sowie eine Datenverbindung zur Übertragung eines Datensignals d von der Sensoreinheit 15 an den Sender 12. Die Kommunikationseinheit 10, insbesondere der Sender 12 und der Empfänger 13 weisen einen Aktivmodus zur Übertragung von Daten auf, und einen Schlafmodus, in dem sie wenig oder keine Leistung aufnehmen.

Die Kommunikation basiert auf einem Zeitmultiplexverfahren, dem TDMA (Time Division Multiple Access)-Verfahren. Solche Verfahren sind allgemein bekannt und werden in der Mobiltelefonie eingesetzt. Ein zeitlicher Ablauf einer Datenübertragung in einem TDMA-System ist in Figur 2 entlang einer Zeitachse t dargestellt. Eine Basisstation sendet in einem Zeitintervall 21 ein Synchronisationssignal aus, welches beispielsweise einer Trägerfrequenz aufmoduliert ist. Einer oder mehrere Sensoren 1 respektive Kommunikationseinheiten 10 eines TDMA-Kommunikationssystems empfangen dieses modulierte Synchronisationssignal und kennen damit einen Anfangszeitpunkt eines zeitlichen Signalrahmens 20. Jedem von mehreren Sensoren 1 ist mindestens ein Zeitfenster 22 innerhalb dieses Signalrahmens 20, also eine zeitliche Verzögerung zwischen einem Anfangszeitpunkt des Signalrahmens 20, respektive dem Empfang des modulierten Synchronisationssignals 21, und einem Anfangszeitpunkt des Zeitfensters 22 zugeordnet. Die Information über diese Zuordnung respektive Verzögerung ist in der Kommunikationseinheit 10 des Sensors 1 und in der Basisstation gespeichert.

Figur 3 zeigt eine zeitlichen Folge von im erfindungsgemässen Verfahren ausgelösten Signalen. Zur Erklärung des Verfahrens wird angenommen, dass sich die Kommunikationseinheit 10 eines Sensors 1 im Schlafmodus befindet. Die zugeordnete Sensoreinheit 15, erfährt eine Zustandsänderung und übermittelt darauf der Schlafeinheit 14 ein Aufwecksignal w und legt ein Datensignal d an die Datenverbindung zum Sender 12 an. Aufgrund des Aufwecksignals w erzeugt die Schlafeinheit 14 ein Wachsignal w/s für Sender 12 und Empfänger 13, worauf diese vom Schlafmodus in den Aktivmodus übergehen. Der Empfänger empfängt über die Antenne 11 ein Signal, beispielsweise auf einer bekannten Trägerfrequenz, und sucht darin nach dem modulierten Synchronisationssignal 21, beispielsweise durch Korrelation des empfangenen Signals mit einer gespeicherten Version des modulierten Synchronisationssignals. Ist dieses gefunden, so übermittelt der Empfänger 13 dem Sender 12 das Synchronisationssignal sync. Aus der bekannten Lage des dem Sensor 1 zugeordneten Zeitfensters 22 innerhalb des Signalrahmens 20 ergibt sich die vorgegebene zeitliche Verzögerung zwischen dem Empfang des modulierten Synchronisationssignals 21 und dem zugeordneten Zeitfenster 22. Nach dieser Verzögerungszeit übermittelt der Sender im Zeitfenster des Sensors 1 eine modulierte Version d_m des Datensignals d über die Antenne 11.

In einer bevorzugten Variante der Erfindung wird, falls der Empfänger 13, beispielsweise aufgrund von Störungen, nach dem Übergang vom Schlaf- in den Aktivmodus kein moduliertes Synchronisationssignal 21 empfängt, das Zeitfenster 22 zur Übermittlung des modulierten Datensignals d_m anhand einer internen Uhr der Kommunikationseinheit 10 bestimmt. Die interne Uhr wird anhand von modulierten Synchronisationssignalen 21 der Basisstation oder anhand eines anderen Zeitsignals, beispielsweise des Global Positioning Systems (GPS) synchronisiert.

Falls die Basisstation das modulierte Datensignal d_m eines bestimmten Sensors 1 empfängt, so sendet sie ein moduliertes Bestätigungssignal ACK_m.

In einer bevorzugten Variante des erfinderischen Verfahrens geschieht dies, falls die Basisstation ein moduliertes Datensignal d_m in einem ersten Zeitfenster 22 empfängt, indem sie ein einzelnes moduliertes Bestätigungssignal ACK_m erst in einem zweiten, dem ersten folgenden Zeitfenster 22 sendet. Dieser Zusammenhang ist in Figur 4 dargestellt:
■ ein zweites moduliertes Datensignal d_m(n) wird von einem zweiten Sensor 1 an die Basisstation übertragen,
■ anschliessend wird ein allfällige erstes moduliertes Bestätigungssignal ACK_m(n-1) eines vorangehenden, ersten modulierten Datensignals von der Basisstation an einen ersten Sensor 1 übertragen,
■ anschliessend wird ein drittes moduliertes Datensignal d_m(n+1) von einem dritten Sensor 1 an die Basisstation übertragen,
■ und schliesslich wird ein zweites moduliertes Bestätigungssignal ACK_m(n) des Empfangs des zweiten modulierten Datensignals d_m(n) von der Basisstation an den zweiten Sensor 1 übertragen.

Dieser Ablauf hat den Vorteil, dass die Basisstation ausreichend Zeit zur Entscheidung hat, ob in einem Zeitfenster 22 tatsächlich ein moduliertes Datensignal empfangen worden ist. In einer weiteren Variante des erfindungsgemässen Verfahrens wird das modulierte Bestätigungssignal im k-ten Zeitfenster 22 gesendet, welches auf das Zeitfenster 22 folgt, in welchem das zugehörige modulierte Datensignal empfangen wurde, wobei k grösser als eins ist. Ein Wert von k=1 entspricht dem oben ausführlich beschriebenen Ablauf mit der Verzögerung der Bestätigung um die Dauer eines Zeitfensters 22. Die Bestätigungen der Datensignale, welche in den letzten k Zeitfenstern 22 eines Signalrahmens 20 empfangen wurden, geschehen dabei vorzugsweise in den ersten k Zeitfenstern 22 des darauffolgenden Signalrahmens 20.

in einer anderen vorteilhaften Variante des erfinderischen Verfahrens werden die modulierten Bestätigungssignale ACK_m für alle Sensoren 1 als Gruppe von modulierten Bestätigungssignalen übermittelt, ohne dass modulierte Datensignale d_m zwischen den modulierten Bestätigungssignalen ACK_m liegen. Die Übermittlung dieser Gruppe geschieht mit einer fixen zeitlichen Verschiebung gegenüber dem modulierten Synchronisationssignal 21, beispielsweise am Ende eines Signalrahmens 20, oder anschliessend an die Übertragung des modulierten Synchronisationssignals 21..

In einer weiteren vorteilhaften Variante der Erfindung werden die modulierten Bestätigungssignale ACK_m auf einer anderen Trägerfrequenz als die modulierten Datensignale d_m übermittelt.

Falls die Übertragung eines modulierten Datensignals d_m durch den Sender 12 eines Sensors 1 an die Basisstation aufgrund von irgendwelchen Störeinflüssen nicht erfolgreich ist, sind die Daten verloren. Um trotzdem eine sichere Übertragung der Daten zu gewährleisten, sendet eine Kommunikationseinheit 10 ihre Daten wiederholt in aufeinanderfolgenden Signalrahmen 20, bis sie das zugeordnete modulierte Bestätigungssignal empfängt. Erst nach dem Empfang dieser Bestätigung geht die Kommunikationseinheit 10 wieder in den Schlafmodus über.

Ein Beispiel für einen solchen Ablauf ist wieder in Figur 3 gezeigt: nach einer ersten Übermittlung eines modulierten Datensignals d_m empfängt der Empfänger 13 kein moduliertes Bestätigungssignal ACK_m. Darauf übermittelt der Empfänger 13 dem Sender 12 ein negatives Bestätigungssignal nACK. Falls das modulierte Bestätigungssignal ACK_m im Zeitfenster 22 erwartet wird, welches auf das modulierte Datensignal d_m folgt, so kann das negative Bestätigungssignal nACK bereits nach diesem Zeitfenster 22 erzeugt werden, wie in der Figur 3 eingezeichnet. In den anderen oben beschriebenen Varianten der Erfindung, in denen das modulierte Bestätigungssignal ACK_m erst später erwartet wird, wird auch das negative Bestätigungssignal nACK entsprechend später erzeugt. Bei jeder dieser Varianten sendet der Sender 12 das modulierte Datensignal d_m im nächsten Signalrahmen 20 im Zeitfenster 22, welches dem Sensor 10 zugeordnet ist, erneut. Empfängt der Empfänger 13 darauf ein moduliertes Bestätigungssignal ACK_m, wie in Figur 3 gezeigt, so übermittelt er der Schlafeinheit 14 ein Bestätigungssignal ACK, worauf die Schlafeinheit 14 ein Schlafsignal w/s für Sender 12 und Empfänger 13 erzeugt, worauf diese vom Aktivmodus in den Schlafmodus übergehen.

Beim oben beschriebenen wiederholten Senden modulierter Datensignale d_m werden genaue Startzeiten entsprechender Zeitfenster 22 vorteilhafterweise anhand von den in jedem Signalrahmen vorhandenen modulierten Synchronisationssignalen 21 bestimmt. Für den Fall, dass ein solches moduliertes Synchronisationssignal 21 nicht empfangen wird, wird vorteilhafterweise der Startzeitpunkt eines Zeitfensters 22 anhand der internen Uhr der Kommunikationseinheit 10 bestimmt. Die interne Uhr wird beim Empfang eines modulierten Synchronisationssignals 21 synchronisiert.

In einer bevorzugten Ausführungsform der Erfindung ist der Sensor ein Näherungssensor oder ein Näherungsschalter und beruht die Funktion der Sensoreinheit 15 beispielsweise auf einem kapazitiven, induktiven oder photoelektrischen Wirkungsprinzip oder auf einem Hall-Effekt oder auf Ultraschall.

Vorzugsweise verwendet das erfindungsgemässe Verfahren Sensorabtastraten von 1Hz bis 4kHz, Trägerfrequenzen im Bereich von 100kHz bis 5GHz, und Datenraten von 1000 bit/s bis 10 Mbit/s.

Insbesondere sind Trägerfrequenzen in einem ISM (Industrial/Scientific/Medical) - Frequenzband bevorzugt, da dazu keine Funklizenzen erforderlich sind, beispielsweise bei einer Frequenz von mindestens annähernd 2.4 GHz. Bevorzugt beträgt die Sensorabtastrate mindestens annähernd 1kHz, beträgt eine Rahmenlänge eines Signalrahmens 20 mindestens annähernd 1.25 Millisekunden oder mindestens annähernd 5 Millisekunden, und beträgt eine Slotdauer eines Zeitfensters 22 mindestens annähernd 39 Mikrosekunden.

Eine weitere bevorzugten Variante der Erfindung weist mehrere Basistationen auf, welchen jeweils verschiedene Gruppen von Sensoren (1) zugeordnet sind. Um Interferenzen zu vermeiden, verwenden die verschiedenen Gruppen vorteilhafterweise unterschiedliche Frequenzbänder oder/oder unterschiedliche Synchronisationssequenzen.

### Bezugszeichenliste

- 1: Sensor
- 10: Kommunikationseinheit
- 11: Antenne
- 12: Sender Tx
- 13: Empfänger Rx
- 14: Schlafeinheit CHRR
- 15: Sensoreinheit S
- 20: Signalrahmen
- 21: moduliertes Synchronisationssignal
- 22: Zeitfenster
- w: Aufwecksignal
- w/s: Wach/Schlafsignal
- synch: Synchronisationssignal
- d: Datensignal
- d_m: moduliertes Datensignal
- ACK: Bestätigungssignal
- nACK: negatives Bestätigungssignal
- ACK_m: moduliertes Bestätigungssignal
- t: Zeitachse

## Patentansprüche

1. Verfahren zur drahtlosen Übermittlung von Daten von einer Sensoreinheit (15) eines Sensors (1) über eine Kommunikationseinheit (10) an eine Basisstation, bei dem die Kommunikationseinheit (10)
a) ein Aufwecksignal (w) von der Sensoreinheit (15) erhält,
b) von einem Schlafmodus in einen Aktivmodus übergeht,
c) ein moduliertes Datensignal (d_m) an die Basisstation sendet,
d) den Empfang eines modulierten Bestätigungssignals (ACK_m) abwartet,
e) im Falle des Empfangs des modulierten Bestätigungssignals (ACK_m) vom Aktivmodus in den Schlafmodus übergeht,
**dadurch gekennzeichnet, dass** die Kommunikationseinheit (10)
f) im Falle keines Empfangs des modulierten Bestätigungssignals (ACK_m) erneut ein moduliertes Datensignal (d_m) sendet und gemäss Schritt d) weiterfährt,
und dass die Kommunikationseinheit (10) in Schritt c) das modulierte Datensignal (d_m) sendet, indem die Kommunikationseinheit (10) einen Empfänger (13) der Kommunikationseinheit (10) einschaltet, den Empfang eines modulierten Synchronisationssignals (21) abwartet, und nach einer vorgegebenen Zeit nach Empfang des modulierten Synchronisationssignals (21) das modulierte Datensignal (d_m) sendet.

2. Verfahren gemäss Anspruch 1, **dadurch gekennzeichnet, dass** die Kommunikationseinheit (10) in Schritt c) das modulierte Datensignal (d_m) in einem Zeitfenster (22) sendet, welches anhand einer internen Uhr bestimmt wird.

3. Verfahren gemäss Anspruch 1, **dadurch gekennzeichnet, dass** die Basisstation im Falle eines Empfang eines moduliertes Datensignals (d_m) in einem ersten Zeitfenster (22) ein einzelnes moduliertes Bestätigungssignal (ACK_m) in einem zweiten, dem ersten folgenden Zeitfenster (22) sendet.

4. Verfahren gemäss Anspruch 1, **dadurch gekennzeichnet, dass** die Basisstation nach dem Empfang von modulierten Datensignalen (d_m) mehrerer Sensoren (1) diesen Sensoren (1) zugeordnete modulierte Bestätigungssignale (ACK_m) aufeinanderfolgend sendet, ohne dass Datensignale zwischen den Bestätigungssignalen liegen.

5. Verfahren gemäss Anspruch 1, **dadurch gekennzeichnet, dass** modulierte Datensignale (d_m) und modulierte Bestätigungssignale (ACK_m) auf unterschiedlichen Trägerfrequenzen übertragen werden.

6. Verfahren gemäss Anspruch 1, **dadurch gekennzeichnet, dass** die Kommunikationseinheit (10) das Aufwecksignal (w) und ein Datensignal (d) von einem Näherungssensor, insbesondere von einem Näherungsschalter erhält.

7. Verfahren gemäss Anspruch 6, **dadurch gekennzeichnet, dass** die Sensoreinheit (3) aufgrund eines kapazitiven, induktiven oder photoelektrischen Wirkungsprinzips oder eines Hall-Effekts oder aufgrund von Ultraschall arbeitet.

8. Vorrichtung zur drahtlosen Übermittlung von Daten von einer Sensoreinheit (15) über eine Kommunikationseinheit (10) an eine Basisstation, wobei die Kommunikationseinheit (10) einen Empfänger (13) zum Empfang eines modulierten Synchronisationssignals (21) und zum Empfang eines modulierten Bestätigungssignals (ACK_m) und einen Sender (12) zum Senden eines modulierten Datensignals (d_m) aufweist, und wobei der Empfänger (13) und der Sender (12) beide einen Aktivmodus und einen Schlafmodus aufweisen, die Vorrichtung eine Schlafeinheit (14) zur Umschaltung des Modus von Empfänger (13) und Sender (12) nach Massgabe eines Aufwecksignals (w) der Sensoreinheit (15) und eines Bestätigungssignals (ACK) des Empfängers (13) aufweist,
**dadurch gekennzeichnet, dass** der Sender (12) Mittel zum wiederholten Senden eines modulierten Datensignals (d_m) nach Massgabe eines negativen Bestätigungssignals (nACK) des Empfängers aufweist, und
der Empfänger (13) Mittel zum Abwarten eines Empfangs eines modulierten Synchronisationssignals (21) nach Empfang des Aufwecksignals (w) der Sensoreinheit (15) und zur Erzeugung eines Synchronisationssignals (sync) zur zeitlichen Synchronisation des modulierten Datensignals (d_m) aufweist.

9. Vorrichtung gemäss Anspruch 8, **dadurch gekennzeichnet, dass** der Vorrichtung eine vorgegebene zeitliche Verzögerung zwischen dem Empfang des modulierten Synchronisationssignals (21) und dem Senden des modulierten Datensignals (d_m) zugeordnet ist.

10. Vorrichtung gemäss Anspruch 8, **dadurch gekennzeichnet, dass** die Sensoreinheit (15) ein Näherungssensor oder ein Näherungsschalter ist.

## Claims

1. Method for wireless transmission of data by a sensor unit (15) of a sensor (1) via a communication unit (10) to a base station, in the case of which the communication unit (10)
a) receives a wake-up signal (w) for the sensor unit (15),
b) transfers from a sleep mode into an active mode,
c) sends a modulated data signal to the base station(d_m),
d) awaits the reception of a modulated acknowledgement signal (ACK_m),
e) transfers from the active mode to the sleep mode in the case of the reception of the modulated acknowledgement signal (ACK_m),
**characterized in that** the communication unit (10)
f) sends a modulated data signal (d_m) again in the case of no reception of the modulated acknowledgement signal (ACK_m) and continues in accordance with step d) and **in that** the communication unit (10) sends the modulated data signal (d_m) in step c) by virtue of the fact that the communication unit (10) switches on a receiver (13) of the communication unit (10), awaits the reception of a modulated synchronization signal (21), and sends the modulated data signal (d_m) following a prescribed time after reception of the modulated synchronization signal (21).

2. Method according to Claim 1, **characterized in that** the communication unit (10) sends the modulated data signal (d_m) in step c) in a time window (22) that is determined with the aid of an internal clock.

3. Method according to Claim 1, **characterized in that**, in the case of a reception of a modulated data signal (d_m) in a first time window (22), the base station sends a single modulated acknowledgement signal (ACK_m) in a second time window (22) following the first.

4. Method according to Claim 1, **characterized in that**, after the reception of modulated data signals (d_m) of a plurality of sensors (1), the base station sends, one after another, modulated acknowledgement signals (ACK_m) assigned to these sensors (1) without there being data signals between the acknowledgement signals.

5. Method according to Claim 1, **characterized in that** modulated data signals (d_m) and modulated acknowledgement signals (ACK_m) are transmitted on different carrier frequencies.

6. Method according to Claim 1, **characterized in that** the communication unit (10) receives the wake-up signal (w) and a data signal (d) from a proximity sensor, in particular from a proximity switch.

7. Method according to Claim 6, **characterized in that** the sensor unit (3) operates on the basis of a capacitive, inductive or photoelectric operating principle or a Hall effect, or on the basis of ultrasound.

8. Device for wireless transmission of data from a sensor unit (15) via a communication unit (10) to a base station, the communication unit (10) having a receiver (13) for receiving a modulated synchronization signal (21) and for receiving a modulated acknowledgement signal (ACK_m), and a transmitter (12) for sending a modulated data signal (d_m), and the receiver (13) and the transmitter (12) both having an active mode and a sleep mode, the device having a sleep unit (14) for switching over the mode of the receiver (13) and transmitter (12) in accordance with a wake-up signal (w) from the sensor unit (15), and of an acknowledgement signal (ACK) from the receiver (13), **characterized in that** the transmitter (12) has means for repeatedly sending a modulated data signal (d_m) in accordance with a negative acknowledgement signal (nACK) from the receiver, and the receiver (13) has means for awaiting reception of a modulated synchronization signal (21) after receiving the wake-up signal (w) from the sensor unit (15) and for generating a synchronization signal (sync) for the purpose of temporal synchronization of the modulated data signal (d_m).

9. Device according to Claim 8, **characterized in that** the device is assigned a prescribed time delay between the reception of the modulated synchronization signal (21) and the sending of the modulated data signal (d_m).

10. Device according to Claim 8, **characterized in that** the sensor unit (15) is a proximity sensor or a proximity switch.

## Revendications

1. Procédé pour la transmission sans fil de données d'une unité de capteur (15) d'un capteur (1) au moyen d'une unité de communication (10) vers une station de base, dans lequel l'unité de communication (10)
a) reçoit un signal de réveil (w) de l'unité de capteur (15),
b) passe d'un mode de sommeil à un mode actif,
c) envoie un signal de données modulé (d_m) vers la station de base,
d) attend la réception d'un signal de confirmation modulé (ACK_m),
e) passe du mode actif au mode de sommeil dans le cas de la réception du signal de confirmation modulé (ACK_m),
**caractérisé en ce que** l'unité de communication (10)
f) envoie à nouveau un signal de données modulé (d_m) dans le cas de l'absence de réception du signal de confirmation modulé (ACK_m) et continue selon l'étape d),
et **en ce que** l'unité de communication (10) envoie le signal de données modulé (d_m) à l'étape c), c'est-à-dire que l'unité de communication (10) enclenche un récepteur (13) de l'unité de communication (10), attend la réception d'un signal de synchronisation modulé (21) et envoie le signal de données modulé (d_m) un temps défini après la réception du signal de synchronisation modulé (21).

2. Procédé selon la revendication 1, **caractérisé en ce que** l'unité de communication (10) envoie le signal de données modulé (d_m) à l'étape c) dans une fenêtre temporelle (22) déterminée au moyen d'une horloge interne.

3. Procédé selon la revendication 1, **caractérisé en ce que** dans le cas de la réception d'un signal de données modulé (d_m) dans une première fenêtre temporelle (22), la station de base envoie un signal de confirmation modulé (ACK_m) unique dans une seconde fenêtre suivant la première fenêtre temporelle (22).

4. Procédé selon la revendication 1, **caractérisé en ce qu'**après la réception de signaux de données modulés (d_m) de plusieurs capteurs (1), la station de base envoie successivement à ces capteurs (1) les signaux de confirmation modulés (ACK_m) correspondants sans que des signaux de données soient intercalés entre les signaux de confirmation.

5. Procédé selon la revendication 1, **caractérisé en ce que** les signaux de données modulés (d_m) et les signaux de confirmation modulés (ACK_m) sont transmis sur des fréquences de porteuses différentes.

6. Procédé selon la revendication 1, **caractérisé en ce que** l'unité de communication (10) reçoit le signal de réveil (w) et un signal de données (d) d'un capteur de proximité, en particulier d'un interrupteur de proximité.

7. Procédé selon la revendication 6, **caractérisé en ce que** l'unité de capteur (3) fonctionne selon un principe d'action capacitif, inductif ou photoélectrique ou selon un effet Hall ou par ultrasons.

8. Dispositif pour la transmission sans fil de données d'une unité de capteur (15) au moyen d'une unité de communication (10) vers une unité de base, l'unité de communication (10) présentant un récepteur (13) pour la réception d'un signal de synchronisation modulé (21) et pour la réception d'un signal de confirmation modulé (ACK_m), et un émetteur (12) pour émettre un signal de données modulé (d_m), et le récepteur (13) et l'émetteur (12) présentant tous deux un mode actif et un mode de sommeil, le dispositif présentant une unité de sommeil (14) pour la commutation du mode du récepteur (13) et de l'émetteur (12) en fonction d'un signal de réveil (w) de l'unité de capteur (15) et d'un signal de confirmation (ACK) du récepteur (13),
**caractérisé en ce que** l'émetteur (12) présente des moyens pour l'émission répétée d'un signal de données modulé (d_m) en fonction d'un signal négatif de confirmation (nACK) du récepteur, et que le récepteur (13) présente des moyens pour attendre une réception d'un signal de synchronisation modulé (21) après réception du signal de réveil (w) de l'unité de capteur (15) et pour produire un signal de synchronisation (sync) pour la synchronisation temporelle du signal de données modulé (d_m).

9. Dispositif selon la revendication 8, **caractérisé en ce qu'**un retard défini est affecté au dispositif entre la réception du signal de synchronisation modulé (21) et l'émission du signal de données modulé (d_m).

10. Dispositif selon la revendication 8, **caractérisé en ce que** l'unité de capteur (15) est un capteur de proximité ou un interrupteur de proximité.
